Europäisches Patentamt

European Patent Office

Office européen des brevets

(19)

(11) Veröffentlichungsnummer: **0 193 186**
**A1**

(12) **EUROPÄISCHE PATENTANMELDUNG**

(21) Anmeldenummer: **86102501.3**

(22) Anmeldetag: **26.02.86**

(51) Int. Cl.⁴: **A01D 34/00**

(30) Priorität: **01.03.85 DE 3507205**

(43) Veröffentlichungstag der Anmeldung:
**03.09.86 Patentblatt 86/36**

(84) Benannte Vertragsstaaten:
**AT BE CH DE FR GB IT LI LU NL SE**

(71) Anmelder: **GARDENA Kress + Kastner GmbH**
**Lichternseestrasse 40 Postfach 27 47**
**D-7900 Ulm (Donau)(DE)**

(72) Erfinder: **Die Erfinder haben auf ihre Nennung**
**verzichtet**

(74) Vertreter: **Patentanwälte Ruff und Beier**
**Neckarstrasse 50**
**D-7000 Stuttgart 1(DE)**

(54) **Rasenmäher.**

(57) Ein Rasenmähergehäuse ist aus drei Teilen aufgebaut, nämlich zunächst einem Kernteil (11) zur Aufnahme des Antriebsmotors und des Mähwerks. In Fahrtrichtung vorne ist. an dem Kernteil (11) ein Gehäusezusatzteil (17) zur Aufnahme der vorderen Räder (21) angebracht. An der gegenüberliegenden, d.h. in Fahrtrichtung hinteren Seite ist ebenfalls ein weiteres Zusatzgehäuseteil (22) befestigt, das zur Aufnahme der hinteren Räder (24), des Griffs für den Rasenmäher und der Grasfangeinrichtung vorgesehen ist.

FIG. 1

EP 0 193 186 A1

# Rasemäher

Die Erfindung betrifft einen Rasenmäher mit einem Gehäuse, das mit Hilfe von Rädern und/oder Walzen fahrbar ist und ein von einem Antriebsmotor antreibbares Mähwerk aufweist.

Rasenmäher dieser Art können sowohl Spindelmäher als auch Sichelmäher sein. Rasenmäher dieser Art unterliegen bestimmten Sicherheitsvorschriften. Zum einen müssen sie mechanisch stabil ausgebildet sein, dürfen andererseits nicht allzu viel Geräusch verursachen und müssen korrosions-und alterungsbeständig sein. Bei Sichelmähern muß darüber hinaus das Gehäuse Schutz vor vom Messer getroffenen Steinen bieten. Aufgrund der Vibrationen, die durch die relativ schnell laufenden Antriebsmotoren erzeugt werden, müssen die Gehäuse darüber hinaus auch vibrationsfest und verwindungssteif sein.

Bislang ist man davon ausgegangen, daß zur Erfüllung aller Anforderungen das Gehäuse aus einem sehr stabilen Werkstoff bestehen und möglichst insgesamt einstückig ausgebildet sein soll. So ist ein Rasenmäherchassis bekannt (DE-U 81 26 381), das insgesamt aus miteinander verschweißten Stahlblechen besteht. Die vorderen und hinteren Radträger sind ebenfalls aus Blech bestehend angeschweißt. Dieses einstückige Gehäuse soll die erforderliche Festigkeit und Verwindungssteifigkeit erreichen.

Bei einem weiteren Rasenmäher (DE-C 27 27 157) besteht das schalenartige Gehäuse aus zwei jeweils einstückigen Halbteilen, die längs einer horizontalen Ebene miteinander verbunden sind.

Ein weiterer Rasenmäher (DE-C 26 27 099) besitzt ein Gehäuse, das in seiner Gesamtheit einstückig aus Stahlblech gebildet ist.

Auch die DE-A 32 32 895 schlägt zur Schaffung eines verwindungsfreien Rasenmähergehäuses vor, daß das gesamte Gehäuse einstückig ausgebildet ist.

Weiterhin ist ein Rasenmäher bekannt (US-A 3942308), der an seiner Rückseite mithilfe zweier Klammern mit einem Düngerstreuer verbunden ist. Da der Düngerstreuer schon zwei Räder hat, besitzt das im übrigen vollständige Rasenmähergehäuse nur an seiner Vorderseite Räder.

Der Erfindung liegt die Aufgabe zugrunde, einen Rasenmäher im Hinblick auf eine leichtere und kostengünstigere Herstellbarkeit, die Erfüllung der verschiedensten von Rasenmähern zu erfüllenden Erfordernisse und eine vereinfachte Lagerhaltung weiter zu entwickeln.

Zur Lösung dieser Aufgabe ist erfindungsgemäß vorgesehen, daß das Rasenmähergehäuse aus einem zentralen, den Antriebsmotor und das Mähwerk im wesentlichen vollständig enthaltenden Kernteil und mindestens einem mit dem Kernteil verbindbaren bzw. verbundenen, in Fahrtrichtung des Rasenmähers vorderen oder hinteren Zusatzgehäuseteil aufgebaut ist, das mindestens ein Rad bzw. eine Walze und ggf. einen Griff aufweist, wobei die quer verlaufende Trennstelle zwischen dem Kernteil und dem mindestens einen Zusatzteil im wesentlichen außerhalb des von dem Mähwerk benötigten Raumes liegt und an der Trennstelle das Kernteil und das mindestens eine Zusatzgehäuseteil flächig aneinander anliegen. Die Trennstelle bzw. die Trennfläche verläuft dabei im wesentlichen in einer zum Erdboden senkrechten Fläche. Diese von der Erfindung vorgeschlagenen Aufteilung macht es möglich, das Kernteil und das mindestens eine Zusatzteil jeweils getrennt so herzustellen, wie es für die Erfordernisse des jeweiligen Teiles besonders günstig ist. Beispielsweise kann das Kernteil aus einem festeren Werkstoff oder einem Werkstoff größerer Dicke hergestellt sein, während für die Zusatzteile andere Werkstoffe oder Werkstoffe geringerer Dicke verwendet werden können. Es ist möglich, ein und dasselbe Zusatzteil, das beispielsweise die Räder und den Griff enthält, mit unterschiedlichen Kernteilen zu kombinieren, beispielsweise mit größeren bzw. breiteren Kernteilen. Dadurch wird es möglich, Rasenmäher insgesamt modular aufzubauen, so daß trotz mehrerer Rasenmähergrößen die Zahl der herzustellenden Einzelteile klein gehalten wird. Da sich im Betrieb eines Rasenmähers aufgrund des unebenen Erdbodens Verwindungen niemals ganz vermeiden lassen, ist es nach den Maßnahmen der Erfindung möglich, die Auswirkungen der Verwindungen bzw. des unebenen Erdbodens auf das/die Zusatzteile zu beschränken, so daß das Kernteil verwindungsfrei bleiben kann. Dies ist insbesondere auch bei Spindelmähern von großer Wichtigkeit, da dort eine Verwindung der beiden beabstandeten Teilen, in denen die Enden der Messerwalze gelagert sind, zu einem Blockieren dieser Messerwalze führen kann.

Besonders günstig ist es, wenn ein zweites mit dem Kernteil verbindbares Zusatzteil vorgesehen ist, das mindestens ein Rad bzw. eine Walze aufweist. In diesem Fall besteht das Rasenmähergehäuse aus drei Teilen, von denen das zentrale Kernteil den Antriebsmotor und das Mähwerk aufnimmt. Die Räder sind dann an den Zusatzteilen angebracht. Dabei kann an dem hinteren Zusatzgehäuseteil eine Einrichtung zur Anbringung eines Grasfangbehälters angeordnet sein.

Das gegenüberliegende, d.h. vordere Zusatzgehäuseteil kann unter Umständen mit Vorteil auch zweiteilig ausgebildet sein, wobei die zwei Teile des vorderen Zusatzteiles durchaus auch getrennt voneinander sein können. In diesem Fall könnte beispielsweise für jedes Rad eine einzelne Radaufhängung an dem Kernteil anbringbar sein. Diese zweiteilige Ausbildung kann auch bei dem hinteren Zusatzteil vorgesehen sein.

An dem Kernteil selbst brauchen nur die Bohrungen angebracht sein, die zur Befestigung des Antriebsmotors und der beiden Zusatzteile unbedingt erforderlich sind. Die weiteren Verbindungselemente zum Anbringen des Grasauffangbehälters oder des Griffes lassen sich an den Zusatzteilen wesentlich einfacher anbringen als an dem Kernteil. Dieses wird durch die Anbringung weiterer Befestigungseinrichtungen auch nicht geschwächt, so daß die größtmögliche Stabilität des Kernteiles erreicht werden kann.

Die Erfindung schlägt vor, daß das Kernteil im wesentlichen einstückig ausgebildet sein kann. Hierzu eignen sich beispielsweise Alumniumguß oder auch ein Kunststoff besonders hoher Qualität.

Nach der Erfindung kann vorgesehen sein, daß das Kernteil und die Zusatzteile aus dem gleichen Material bestehen. Es können beispielsweise also auch die Zusatzteile aus Aluminiumguß oder auch aus Stahlblech o.dgl. bestehen. Dabei kann man vorsehen, daß das Kernteil dann aus massiverem Blech oder dickerem Guß besteht, während die Zusatzteile materialsparender aufgebaut sein können.

Besonders günstig ist es, wenn in Weiterbildung der Erfindung mindestens ein Zusatzteil aus einem anderen Material bestehen kann als das Kernteil. Hier wird es möglich, das Kernteil aus Aluminiumguß oder einem sonstigen hochwertigen Material herzustellen, das Zusatzteil aber aus einem Kunststoff oder einem anderen Kunststoff als das Kernteil. Dadurch kann es möglich werden, auch die Lautstärke des von dem Rasenmäher erzeugten Geräusches zu verringern, da Kunststoffe weniger Geräusch abgeben als Metall. Nach den Maßnahmen der Erfindung kann trotz hoher Qualität die Verwendung von Metall auf das Kernteil beschränkt werden, so daß der Rasenmäher insgesamt weniger Geräusche abgibt.

Erfindungsgemäß kann die Verbindung zwischen dem Kernteil und den Zusatzteilen beispielsweise durch eine Nietung erfolgen. Auch dann sind die von der Erfindung erreichten Vorteile gegeben, nämlich die Verminderung des Geräusches, die leichtere Herstellbarkeit, die Anpassung der Herstellung und der Materialien der einzelnen Teile auf den speziellen Zweck, die verbesserte Lagerhaltung, und auch der verbesserte Austausch von Teilen des Gerätes. Besonders günstig ist es jedoch, wenn in Weiterbildung die Verbindung zwischen Kernteil und Zusatzteil lösbar ist. Dabei kann beispielsweise vorgesehen sein, daß die Teile miteinander verschraubt sind. Dies ist eine Möglichkeit, bei der die hauptsächlich auf Zug beanspruchte Verbindung besonders stabil ist. Es kann jedoch auch vorgesehen sein, daß die Verbindung mit Hilfe einer Steckverbindung erfolgt, die besonders zur Aufnahme von Scherkräften günstig ist. Auch Kombinationen beider Verbindungsarten sind selbstverständlich nach der Erfindung möglich. Nach der Erfindung kann vorgesehen sein, daß im Bereich der Trennstelle ein Gehäuseteil einen Flansch und das jeweils andere Gehäuseteil einen hakenartig profilierten um den Flansch herumgreifenden Rand aufweist. Auf diese Weise kann eine besonders einfach herzustellende und durchzuführende Verbindung geschaffen werden. Der Flansch kann dabei mit Vorteil an dem Kernteil vorgesehen sein.

Rasenmäher benötigen häufig eine Abdeckhaube für den Motor. Diese Abdeckhaube besteht in der Regel aus leichterem und einfacherem Material. Nach der Erfindung kann vorgesehen sein, daß diese Abdeckhaube von Teilen gebildet wird, die an den Zusatzgehäuseteilen angeordnet oder einstückig mit diesen ausgebildet sind. In diesem Fall braucht das Kernteil nicht einmal Befestigungseinrichtungen für die Abdeckhaube aufzuweisen.

Erfindungsgemäß kann vorgesehen sein, daß bei einem Sichelmäher der Auswurfkanal mindestens teilweise in dem Kernteil ausgebildet ist. Darüber hinaus ist es möglich, auch Teile des Auspuffgehäuses oder sogar Teile der Motorhalterung einstückig mit dem Kernteil auszubilden.

Besonders günstig ist es, wenn das Kernteil aus Metall, vorzugsweise aus Aluminiumguß besteht. Die Zusatzgehäuseteile bestehen nach der Erfindung mit Vorteil aus Kunststoff. Während bei den insgesamt aus Aluminiumguß bestehenden Gehäusen die Räder in Kunststoffbuchsen gelagert sind, die in das Aluminium eingebracht werden können, erübrigt sich dieser getrennte Herstellungsaufwand natürlich dann, wenn die Zusatzgehäuseteile bereits aus Kunststoff bestehen.

Weitere Merkmale, Einzelheiten und Vorzüge der Erfindung ergeben sich aus der folgenden Beschreibung bevorzugter Ausführungsformen der Erfindung sowie anhand der Zeichnung. Hierbei zeigen:

Fig. 1 eine teilweise aufgebrochene Aufsicht auf einen Rasenmäher nach der Erfindung;

Fig. 2 einen Schnitt längs Linie II-II in Fig. 1;

Fig. 3 eine Ansicht des Kernteiles von rechts in Fig. 2;

Fig. 4 in vergrößertem Maßstab die Befestigungs zwischen dem Kernteil und dem hinteren Zusatzteil;

Fig. 5 die Verbindung zwischen dem vorderen Zusatzteil und dem Kernteil;

Fig. 6 eine Ansicht des geschnittenen Teiles der Fig. 1;

Fig. 7 die schematische Seitenansicht einer zweiten Ausführungsform;

Fig. 8 eine Aufsicht auf den Rasenmäher nach Fig. 7;

Fig. 9 einen schematischen Längsschnitt durch einen Spindelmäher;

Fig. 10 die Aufsicht auf den Spindelmäher in Fig. 9.

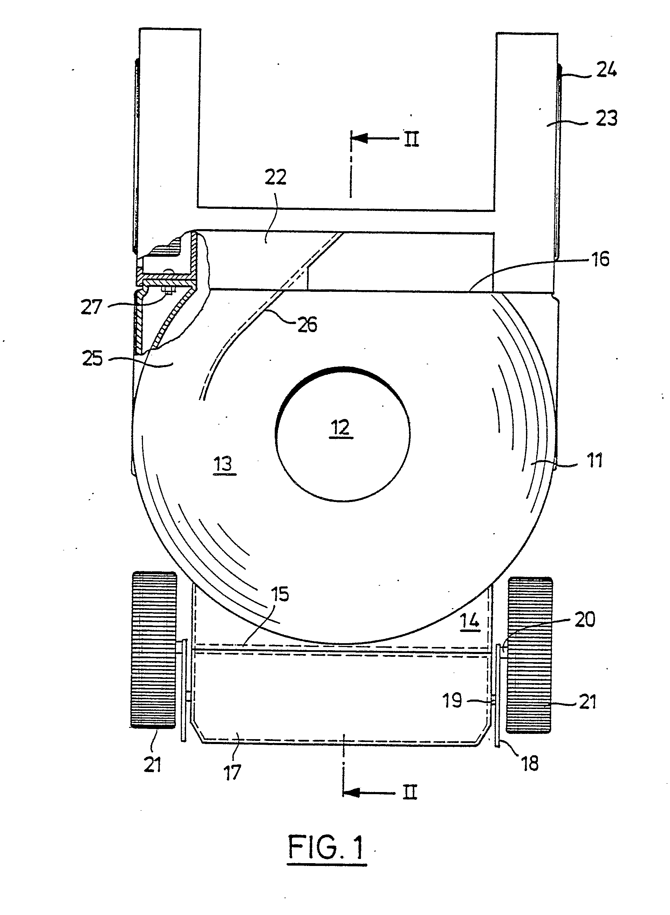

Das in Fig. 1 dargestellte Rasenmähergehäuse enthält ein zentrales Kernteil 11, das zur Aufnahme des nicht dargestellten Antriebsmotors mit seinem rotierenden Messer ausgebildet ist. Das Kernteil enthält in seiner Oberseite eine zentrale Durchbrechung 12, durch die die Antriebswelle des Antriebsmotors hindurchgreift. Zur Befestigung des Antriebsmotors können mehrere Löcher vorhanden sein, die jedoch aus Gründen der Vereinfachung nicht dargestellt sind. Das Kernteil 11 enthält einen in Aufsicht im wesentlichen kreisrunden Abschnitt 13, an den sich in Fahrtrichtung vorne ein geradliniger Abschnitt 14 verringerter Breite anschließt. Der geradlinige Abschnitt 14 ist von einer quer zur Bewegungsrichtung des Rasenmähers verlaufenden Querwand 15 abgeschlossen. Auf der gegenüberliegenden Seite, d.h. in Fahrtrichtung nach hinten, wird das Kernteil 11 ebenfalls durch eine geradlinig verlaufende Fläche 16 begrenzt.

An dem Kernteil 11 ist in Fahrtrichtung vorne an dem geradlinigen Abschnitt 14 ein in seiner Breite gleich ausgebildetes Zusatzgehäuseteil 17 angebracht, beispielsweise verschraubt. Das Zusatzgehäuseteil 17 enthält beidseits je eine Lagerschwinge 18, die schwenkbar mit Hilfe eines kurzen Zapfens 19 an dem Zusatzteil 17 gelagert ist. An der Lagerschwinge 18 ist wiederum mit Hilfe einer Achse 20 drehbar ein Laufrad 21 gelagert. Anstelle der verwendeten beiden Laufräder 21 könnte auch jeweils eine durchgehende Walze verwendet werden. Aufgrund der schwenkbaren Anordnung der Lagerschwingen 18 können die Räder höhenverstellt werden. Die Einrichtung zur Höhenverstellung ist nicht dargestellt, da sie an sich bekannt ist.

Auf der gegenüberliegenden Seite ist an dem Kernteil 11 ebenfalls ein Zusatzgehäuseteil 22 befestigt, vorzugsweise ebenfalls angeschraubt. Das hintere Zusatzteil 22 enthält zwei Radkästen 23, die zwischen sich einen Zwischenraum bilden, in dem ein Grasfangbehälter angeordnet werden kann. In den Radkästen 23 ist je ein hinteres Rad 24 angeordnet, das in ähnlicher Weise an einer Lagerschwinge gelagert ist, wie dies bei den Vorderrädern 21 gezeigt ist.

Das Kernteil 11 weist an seiner Hinterseite einen Auswurftunnel 25 auf, der etwa tangential zum Außenrand der Kreisform verläuft. Dieser Auswurftunnel 25, der zum Innenraum hin durch eine Seitenwand 26 begrenzt wird, setzt sich im hinteren Zusatzteil 22 fort.

Die Befestigung des hinteren Zusatzteiles 22 an dem Kernteil geschieht ebenfalls mit Hilfe von Schrauben, von denen in Fig. 1 eine Schraube 27 zu sehen ist.

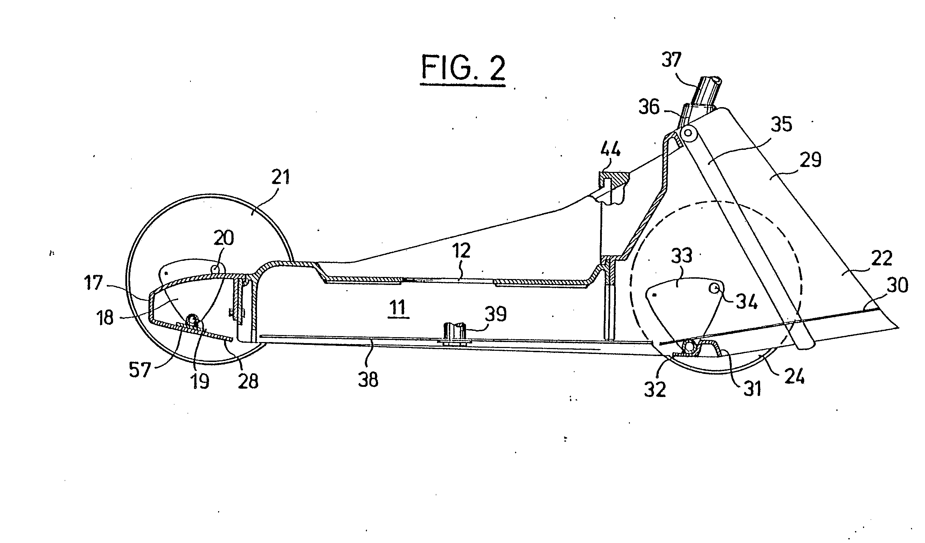

Aus der Fig. 2 ergibt sich, daß quer durch das vordere Zusatzteil 17 eine Traverse 57 verläuft, die an einem Boden 28 des Zusatzteiles 17 angebracht ist. An der Traverse 57 ist die Halterung für den Zapfen 19 befestigt. In der Lagerschwinge 18 ist das vordere Laufrad 21 mit Hilfe der Achse 20 gelagert, die im Bereich einer Ecke der etwa dreieckförmigen Lagerschwinge 18 angeordnet ist.

Das hintere Zusatzteil 22 weist neben den Seitenwänden 29 und den bereits erwähnten hinteren Laufrädern 24 ein Leitblech 30 auf, mit dessen Hilfe das abgeschnittene Gras in den nicht dargestellten Grasfangbehälter befördert wird. Auch im hinteren Zusatzteil 22 ist eine quer zur Fahrtrichtung verlaufende Traverse 31 angeordnet, die an beiden Seitenwänden 29 befestigt ist. Auf der Traverse 31 ist mit Hilfe einer Welle 32 zu beiden Seiten wiederum jeweils eine Lagerschwinge 33 schwenkbar gelagert, die in einer Achse 34 jeweils eines der hinteren Laufräder 24 lagert. Durch Verschwenkung der Lagerschwingen läßt sich die Bodenfreiheit des Rasenmähers verändern.

Weiterhin enthält das hintere Zusatzteil 22 eine Klappe 35, die bei nicht eingehängter Grasfangvorrichtung geschlossen ist. An der Oberseite des hinteren Zusatzteiles 22 ist eine Halterung 36 für einen nur abgebrochen dargestellten Griff 37 angeordnet.

Das Messer 38 mit seiner Welle 39 ist nur kurz angedeutet, der eigentliche Antriebsmotor ist aus Gründen der Vereinfachung nicht dargestellt. Es ergibt sich jedoch auch aus der vereinfachten Darstellung, daß das Kernteil 11 im wesentlichen nur zur Aufnahme des Antriebsmotors und des aus dem Messer 38 bestehenden Mähwerks ausgebildet ist. Im Bereich des Übergangs zwischen dem Kernteil 11 und dem hinteren Zusatzteil 22 greift das Messer 38 etwas über das Kernteil 11 hinaus, während es in allen übrigen Bereichen vollständig innerhalb des Kernteils 11 enthalten ist.

Das vordere Zusatzteil 17 dient zur Lagerung der vorderen Laufräder 21, während das hintere Zusatzteil 22 praktisch alle zusätzlichen Funktionsteile aufnimmt mit Ausnahme des Antriebsmotors und des Mähwerks.

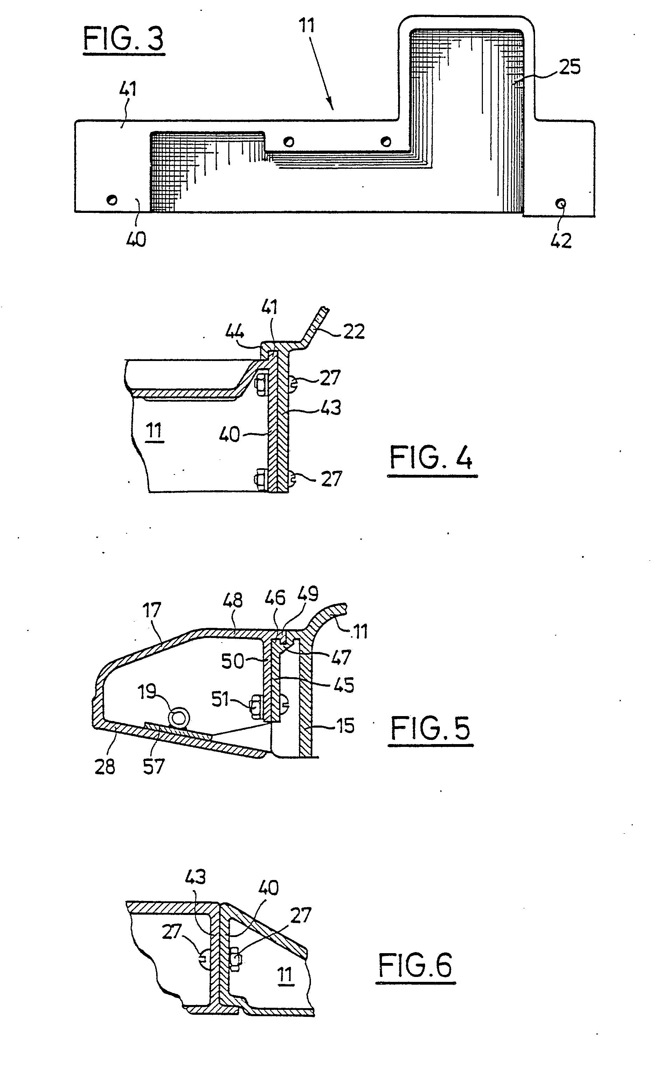

Fig. 3 zeigt die nach hinten gerichtete Abschlußwand 40 des Kernteils 11 des Rasenmähers nach Fig. 1 und 2. Wie bereits aus Fig. 2 zu ersehen ist, besitzt das Gehäuse einen umlaufenden Flansch 41, der zur Befestigung des Zusatzteiles dient. Deutlich zu sehen ist der Auswurftunnel 25, der in Fig. 3 rechts ist. In der Wand 40 sind vier Bohrungen 42 enthalten, die zur Aufnahme von Schrauben 27 dienen. Die Wand 40 ist im mittleren Bereich stark ausgespart, um das Hindurchtreten des Messers 38 und das Entfernen des Grases durch den Aufwurftunnel 25 zu ermöglichen.

Fig. 4 zeigt im Querschnitt die Befestigung zwischen dem Kernteil 11 und dem hinteren Zusatzteil 22. Beide Teile besitzen in diesem Bereich je eine etwa senkrecht zum Erdboden verlaufende Wand 40 bzw. 43. An der Oberseite der Vorderwand 43 des Zusatzteiles 22 ist ein profilartiger Rand 44 ausgebildet, der etwa hakenförmig aussieht. Er übergreift den Flansch 41 an der Oberseite der Wand 40. Dadurch erfolgt in diesem Bereich eine Verhakung zwischen den beiden Teilen. Die beiden Wände 40 und 43 sind dann mit Hilfe von Schrauben und Muttern aneinander festgeschraubt. Dabei reichen insgesamt vier Schrauben vollständig aus.

Ähnlich erfolgt die Verbindung zwischen Kernteil 11 und vorderem Zusatzteil 17. Hier ist zusätzlich zu der vorderen Querwand 15 des Kernteils 11 eine weitere parallel zu dieser verlaufende Querschiene 45 angeordnet, die ebenfalls etwa senkrecht zum Erdboden verläuft. Sie enthält an ihrer Oberseite einen weiteren Flansch 46, hinter dem eine Nut 47 gebildet ist.

Die Oberseite 48 enthält hier ebenfalls ein hakenförmiges Profil 49, das in die Nut 47 eingreift bzw. den Flansch 46 übergreift. Das vordere Zusatzteil 17 besitzt ebenfalls als hinteren Abschluß eine Querschiene 50, die an der Querschiene 45 des Kernteiles 11 flächig anliegt und mit dieser mit Hilfe von Schrauben und Muttern 51 verschraubt ist. Die Anordnung der Lagerschwingen ist nicht mehr im einzelnen dargestellt.

Fig. 6 zeigt gegenüber Fig. 1 vergrößert die Befestigung des Zusatzteiles 22 an dem Kernteil 11 im seitlichen Bereich, d.h. in dem Bereich, der in Fig. 1 geschnitten dargestellt ist. Auch hier ist eine flächige Anlage der beiden Wände 40, 43 gegeben.

Wie sich im übrigen auch aus Fig. 2 ergibt, greift der profilartige Rand 44 des Zusatzteiles 22 auch an der Oberseite des Auswurftunnels 25 in der gleichen Weise an, wie dies in Fig. 4 bzgl. des Restes der Wand 44 dargestellt ist.

Die Befestigung der beiden Zusatzteile an dem Kernteil ist derart durchgeführt, daß an jeder Trennstelle Teile der jeweils zwei Gehäuseteile flächig aneinander anliegen und direkt miteinander verbunden sind.

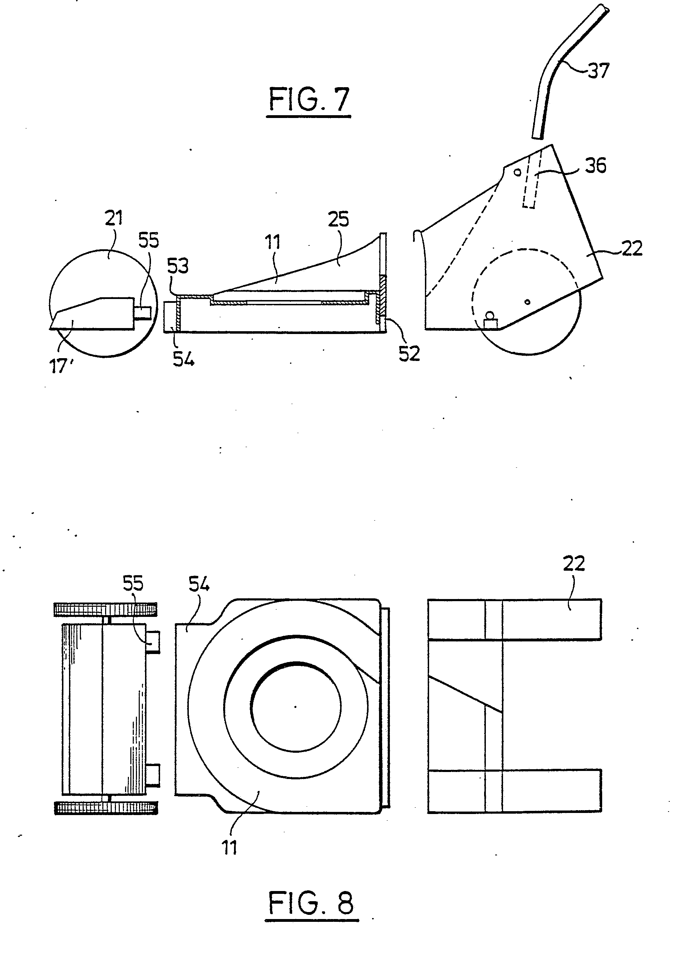

Fig. 7 zeigt stark vereinfacht eine teilweise geschnittene Seitenansicht einer zweiten Ausführungsform. Wiederum ist ein Kernteil 11 zur Aufnahme des Rasenmähermotors und des Mähbalkens vorgesehen, der ebenfalls einen Grasauswurftunnel 25 aufweist. Das Kernteil ist an seiner in Fahrtrichtung hinteren Seite 52 mit einem hinteren Zusatzteil 22 verbindbar, das in ähnlicher Weise aufgebaut ist wie bei der Ausführungsform nach Fig. 1 und 2. Es enthält an seiner Oberseite wiederum eine Halterung 36 zur Aufnahme eines Griffes 37.

An der Vorderseite 53 weist das Kernteil 11 der Ausführungsform nach Fig. 7 und 8 einen innen hohlen Ansatz 54 auf, in den entsprechend ausgebildete Ansätze 55 des vorderen Zusatzgehäuseteils 17' einsteckbar sind. Wiederum sind an dem vorderen Zusatzteil 17' die Laufräder 21 angeordnet. Durch das Einstecken der Ansätze 55 in den hohlen Ansatz 54 erfolgt eine Befestigung, die besonders günstig bei Scherkräften ist. Selbstverständlich kann zusätzlich eine Verschraubung zur Aufnahme der Zugkräfte vorgesehen sein. Auch hier ist eine Verbindung vorhanden, bei der Fläche an Fläche liegt.

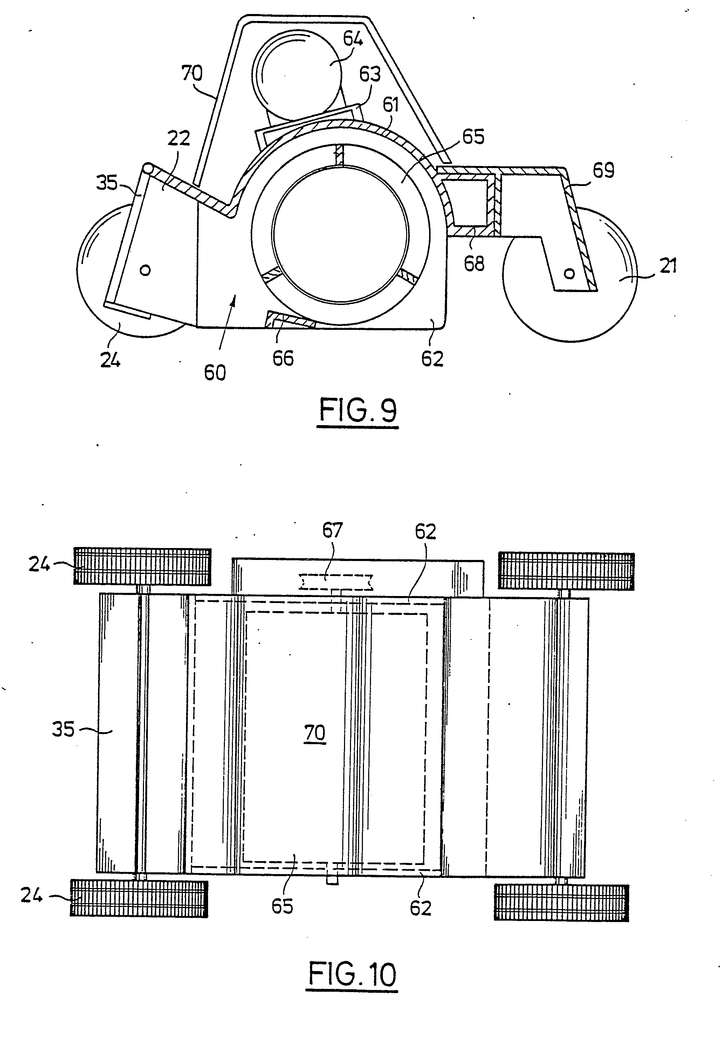

Fig. 9 zeigt nun einen Längsschnitt durch einen Spindelmäher. Wiederum besteht das Gehäuse aus einem Kernteil 60, das an seiner Oberseite eine Deckwand 61 in Form einer Zylindermantelfläche und seitlich jeweils eine Seitenwand 62 aufweist. Auf der Deckwand 61 ist eine Brücke 63 zur Anbringung des Motors 64 angeordnet. Innerhalb des Kernteils 60 ist die Spindel 65 enthalten, die in den Seitenwänden 62 drehbar gelagert ist. Der Antrieb erfolgt über den Motor 64 beispielsweise mit Hilfe eines Riemens, der in eine Riemenscheibe 67 (siehe Fig. 10) eingreift.

Das Kernteil 60 bildet ein außerordentlich starres Gehäuse zur Aufnahme des Motors und des aus der Spindel 65 bestehenden Mähwerks, an dessen Unterseite ein feststehender Messerbalken 66 angeordnet ist. Aufgrund der starren Ausbildung des Kernteiles 60 erfolgt keine Verwindung des Gehäuses, so daß die Drehung der Spindel 65 nicht behindert wird.

An der in Fig. 9 rechten Vorderseite des Mähers enthält das Kernteil 60 ein quer zur Fahrtrichtung verlaufendes kastenartiges Profil 68, an dem das vordere Zusatzgehäuseteil 69 befestigt, vorzugsweise angeschraubt ist. Das vordere Zusatzteil 69 ist wiederum zur Lagerung der vorderen Laufräder 21 ausgebildet. Sie sind im dargestellten Beispiel nicht höhenverstellbar, könnten selbstverständlich aber auch höhenverstellbar sein.

Auf der in Fig. 9 linken Rückseite des Kernteiles 60 ist das hintere Zusatzgehäuseteil 22 angebracht, das wiederum eine Klappe 35 sowie zwei Laufräder 24 enthält.

Oberhalb des Antriebsmotors 64 ist auf das Kernteil 60 eine Abdeckhaube 70 aufgesetzt, die den Motor 64 abdeckt.

Bei der von der Erfindung vorgeschlagenen Ausbildung des Rasenmähergehäuses ist es möglich, das Kernteil sehr stabil herzustellen, ohne daß allzu viel Nachbearbeitungen für die Befestigung von weiteren Funktionsteilen wie Rädern o.dgl. notwendig wäre. Diese weiteren Funktionsteile können an den an dem Kernteil des Gehäuses anzubringenden Zusatzgehäuseteilen angebracht werden, die aus Kunststoff oder sonst einfacheren Materialien bestehen können und daher leichter zu bearbeiten sind. Bei Änderung der Größe des Kernteils können dennoch die unveränderten Zusatzgehäuseteile verwendet werden, wie sich beispielsweise aus Fig. 1 ergibt. Bei dem dort dargestellten Sichelmäher ist für den Auswurf des Grases der Tangentenwinkel an der Außenseite des Auswurftunnels 25 von besonderer Wichtigkeit. Selbst bei Verwendung eines breiteren Kernteils 11 bei unverändertem Zusatzteil 22 kann der gleiche Tangentenwinkel verwendet werden, da das Kernteil 11 in diesem Fall auch länger wäre.

·Ansprüche·

1. Rasenmäher mit einem Gehäuse, das mit Hilfe von Rädern (21, 24) und/oder Walzen fahrbar ist und ein von einem Antriebsmotor antreibbares Mähwerk aufweist, dadurch gekennzeichnet, daß das Gehäuse aus einem zentralen, den Antriebsmotor und das Mähwerk enthaltenden Kernteil (11) und mindestens einem mit dem Kernteil (11) verbindbaren bzw. verbundenen, in Fahrtrichtung des Rasenmähers vorderen oder hinteren Zusatzgehäuseteil - (17, 22) aufgebaut ist, das mindestens ein Rad (21, 24) bzw. eine Walze und ggf. einen Griff (37) aufweist, wobei die quer verlaufende Trennstelle (16) zwischen dem Kernteil (11) und dem mindestens einen Zusatzteil (17, 22) im wesentlichen außerhalb des von dem Mähwerk benötigten Raumes liegt und an der Trennstelle (16) das Kernteil (11) und das mindestens eine Zusatzteil (17,22) flächig aneinander anliegen.

2. Rasenmäher nach einem der vorhergehenden Ansprüche, dadurch gekennzeichnet, daß die Verbindung zwischen Kernteil (11) und Zusatzteil (17, 22) lösbar ist.

3. Rasenmäher nach Anspruch 1 oder 2, dadurch gekennzeichnet, daß ein zweites mit dem Kernteil (11) verbindbares Zusatzteil (22, 17) vorgesehen ist, das mindestens ein Rad (21, 24) bzw. eine Walze aufweist.

4. Rasenmäher nach einem der vorhergehenden Ansprüche, dadurch gekennzeichnet, daß das Kernteil (11) im wesentlichen einstückig ausgebildet ist.

5. Rasenmäher nach einem der vorhergehenden Ansprüche, dadurch gekennzeichnet, daß Kernteil (11) und Zusatzteil (17, 22) aus dem gleichen Material bestehen.

6. Rasenmäher nach einem der Ansprüche 1 bis 4, dadurch gekennzeichnet, daß mindestens ein Zusatzteil (17, 22) aus einem anderen Material besteht als das Kernteil - (11).

7. Rasenmäher nach einem der vorhergehenden Ansprüche, dadurch gekennzeichnet, daß eine Steckverbindung und/oder eine Schraubverbindung zwischen den Gehäuseteilen (11, 17, 22) vorgesehen ist.

8. Rasenmäher nach einem der vorhergehenden Ansprüche, dadurch gekennzeichnet, daß das hintere Zusatzgehäuseteil (22) eine Einrichtung zur Anbringung eines Grasfangbehälters aufweist.

9. Rasenmäher nach einem der vorhergehenden Ansprüche, dadurch gekennzeichnet, daß ein Zusatzgehäuseteil (17, 22) zweiteilig ausgebildet ist.

10. Rasenmäher nach einem der vorhergehenden Ansprüche, dadurch gekennzeichnet, daß mindestens ein Zusatzgehäuseteil (17, 22) einen Teil einer Abdeckhaube für den Motor aufweist.

11. Rasenmäher nach einem der vorhergehenden Ansprüche, dadurch gekennzeichnet, daß bei einem Sichelmäher der Auswurfkanal (25) mindestens teilweise in dem Kernteil (11) ausgebildet ist.

12. Rasenmäher nach einem der vorhergehenden Ansprüche, dadurch gekennzeichnet, daß das Kernteil (11) aus Metall, vorzugsweise Aluminiumguß besteht und/oder die Zusatzgehäuseteile (17, 22) aus Kunststoff bestehen.

13. Rasenmäher nach einem der vorhergehenden Ansprüche, dadurch gekennzeichnet, daß im Bereich der Trennstelle (16) ein Gehäuseteil (11) einen Flansch (41) und das jeweils andere Gehäuseteil (17, 22) einen hakenartig profilierten, um den Flansch (41) herumgreifenden Rand (44, 49) aufweist.

FIG. 1

FIG. 2

0 193 186

# FIG. 3

41  11  25

40  42

# FIG. 4

44  41  22
27
43
11  40
27

# FIG.5

17  48  46  49
11
50  47
45
19
51  15
28  57

# FIG.6

43  40
27
27
11

## FIG. 7

## FIG. 8

FIG.9

FIG.10

| | EINSCHLÄGIGE DOKUMENTE | | EP 86102501.3 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) | |
| X | US - A - 3 800 902 (RICHARD E. KELLER)<br><br>* Anspruch 1; Fig. 2,4,9,10 *<br>-- | 1,2 | A 01 D 34/00 | |
| D,A | US - A - 3 942 308 (A.P. VICENDERE et al.)<br><br>* Fig. 1,2 *<br>-- | 1,2 | | |
| A | US - A - 3 402 535 (WILLIAM F. NELSON)<br><br>* Fig. 4 *<br>-- | 1,2 | | |
| A | DE - B - 2 246 232 (MATSUSHITA ELECTRIC WORKS LTD.)<br><br>* Fig. 2 *<br>-- | 1 | RECHERCHIERTE SACHGEBIETE (Int. Cl.4) | |
| A | US - A - 3 102 375 (A.G. TROKA et al.)<br><br>---- | | A 01 D 34/00 | |

Der vorliegende Recherchenbericht wurde für alle Patentansprüche erstellt.

| Recherchenort | Abschlußdatum der Recherche | Prüfer |
|---|---|---|
| WIEN | 15-05-1986 | MENTLER |